# EUROPEAN PATENT APPLICATION

(11) **EP 1 112 913 A1**
(43) Date of publication of application: **04.07.2001**
(21) Application number: 00830828.0
(22) Date of filing: 15.12.2000
(51) Int. Cl.: B62D 12/00, B62D 11/04

(54) **Electric steering device for an articulated machine, particularly an earth-moving machine, with wheels controlled by independent electric motors**

(30) Priority: 30.12.1999 IT TO991176
(71) Applicant: C.R.F. Societa' Consortile per Azioni, 10043 Orbassano (Torino) (IT)
(72) Inventor: Venturi, Massimo, 10043 Orbassano (Torino) (IT); Gorgerino, Andrea, 10043 Orbassano (Torino) (IT)
(74) Representative: Notaro, Giancarlo

(57) **Abstract**

In an articulated machine, comprising a front assembly (2) with front drive wheels (3, 4) independent of each other, and a rear assembly (5) with rear drive wheels (6, 7) independent of each other, coupled to the front assembly (2) with an articulation about an essentially vertical axis (12), the aforesaid front and rear wheels are driven by four corresponding electric motors (M1 - M4) which are independent of each other. It is therefore possible to drive the wheels in such a way that they transmit to the ground forces differing in modulus and/or orientation and/or direction of rotation, in order to obtain a desired steering angle between the front assembly (2) and the rear assembly (5). Thus the hydraulic cylinders conventionally used to produce the steering of the articulated machine are eliminated, together with the hydraulic circuit associated with them. The system also comprises an auxiliary electric motor, of a controllable type, which drives a pump forming part of the hydraulic circuit of the operating equipment of the machine.

## Description

The present invention relates to articulated machines, particularly earth-moving machines, such as loaders or excavators with rubber-tyred wheels, of the known type comprising:
a front assembly, having two front drive wheels;
a rear assembly, having two rear drive wheels, coupled to the front assembly by an articulation with an essentially vertical axis;
motor means for driving the front wheels and the rear wheels, and
means for producing the relative steering rotation between the said front assembly and the said rear assembly about the said vertical axis of articulation.

In articulated machines of the conventional type, the aforesaid means for producing the relative steering rotation between the front assembly and the rear assembly of the machine consist of hydraulic cylinders interposed between the two assembles on both sides of their mutual articulation, which are activated to extend or retract in order to provide a desired steering rotation of the machine. However, this solution is not optimal, since the hydraulic circuits associated with the aforesaid hydraulic cylinders are subject to losses and leakage of oil, with consequent problems of maintenance.

In the past, solutions differing from that mentioned above have been proposed, but have proved to be unsatisfactory. For example, the patent US-A-5529136 describes an articulated machine of the type indicated at the start of the present description, in which the front axle of the machine is provided with a differential device having a hydro-mechanical control which enables the front wheels of the machine to be driven with a predetermined speed difference, in order to obtain a desired degree of steering. However, this solution is relatively complicated and costly, and in any case requires the use of a hydraulic circuit subject to leakage and with consequent requirements for maintenance. Moreover, this known system does not allow the two wheels of a single axle to transmit different forces, possibly in different directions of rotation, to the ground.

The object of the present invention is to overcome the aforementioned disadvantages of the prior art, with a structure which is relatively simple, reliable, and inexpensive to maintain.

In order to achieve this object, the invention relates to an articulated machine of the type indicated at the start of the present description, characterized in that the aforesaid front wheels are independent of each other, the aforesaid rear wheels are independent of each other and the said motor means comprise four electric motors, each associated with one of the front and rear wheels, controllable independently of each other, in such a way that the said electric motors also constitute the said means for producing the steering rotation about the said axis of articulation. This is because, by controlling in a completely independent way the forces transmitted to the ground by the wheels of the motor vehicle, it is possible, for example, to make the two front wheels transmit forces differing in modulus and/or direction of rotation, in order to obtain a desired steering angle.

According to a further characteristic of the invention, the aforesaid electric motors are controlled by an electronic controller according to a signal from a steering control member (consisting for example of one or more levers, or a steering wheel), preferably according to a feedback logic.

In a preferred embodiment, the articulated machine according to the invention comprises an electrical power source for supplying the electric motors, together with a controllable auxiliary electric motor for operating a pump of a service hydraulic circuit of the machine, this circuit being designed for example to drive the operating device with which the machine is provided. This arrangement makes it possible to use a pump having a relatively simple and economical structure, with a fixed capacity, since the possibility of adjustment is provided by the control of the auxiliary electric motor which drives the aforesaid pump.

As can be seen, in the articulated machine according to the invention the hydraulic steering cylinders and the corresponding hydraulic circuit are entirely dispensed with, thus eliminating the whole problem of the reliability of these components and the corresponding maintenance operations which they required. The hydraulic system is limited to the circuit required to drive the operating equipment with which the machine is provided. Moreover, by contrast with known machines, the machine according to the invention does not require a differential between each pair of drive wheels, and therefore does not require the operation of releasing the differential during steering (which causes a loss of adhesion during this manoeuvre), or the operation of locking on completion of the manoeuvre. In the case of the invention, the four "drive wheels" act as a self-locking differential which is permanently active.

The electrical power source provided on the machine can be a generator of any known type. In one embodiment investigated by the applicant, this generator consists of a fuel cell associated with a hydrogen reservoir. Clearly, any other type of source can be used.

The invention will now be described with reference to the attached drawings, provided purely by way of example and without restrictive intent, in which:
Figure 1 is a schematic plan view of an articulated machine according to the invention,
Figure 2 is a diagram of the control system of the machine of Figure 1, and
Figure 3 is a schematic view from above which shows the vehicle according to the invention in the steered condition.

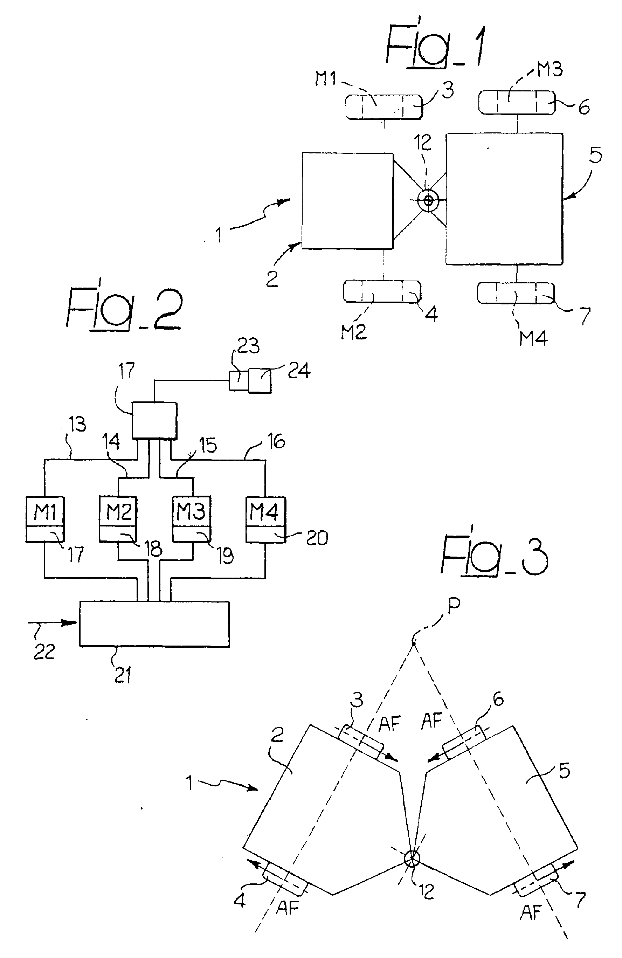

In Figure 1, the number 1 indicates as a whole an earth-moving machine of the articulated type, comprising a front assembly 2 with two front wheels 3, 4, and a rear assembly 5 with two rear wheels 6, 7. The four wheels 3, 4, 6, 7 are totally independent of each other, and are driven by corresponding electric motors M1, M2 and M3, M4 associated directly with these wheels. The front assembly 2 and the rear assembly 5 are joined together by articulation about an essentially vertical axis 12.

With reference to the Figure 2, the four motors M1, M2, M3, M4 are supplied through corresponding lines 13, 14, 15, 16 from an electrical power generator 17 of any known type. The motors M1 - M4 are provided with corresponding electronic control circuits 17, 18, 19, 20 which are controlled by an electronic controller 21 according to a signal 22 generated by the steering members of the machine, in accordance with the commands entered by the operator. In particular, the driver's position will be provided, in a known way, with steering control members, in the form of one or more levers or a steering wheel for example, capable of generating a signal 22 indicating the desired steering angle. The electronic controller 21 therefore controls the motors M1 - M4 according to a predetermined criterion, which is a function of the desired steering angle, in such a way that the wheels are driven in different ways from each other, in order that they will transmit forces differing in their modulus and/or direction of rotation to the ground. For example, Figure 3 of the attached drawings illustrates a case in which both the front wheels and the rear wheels are driven with equal and opposing velocities, in such a way as to generate forces towards the ground which are equal in modulus but opposite in direction of rotation. This causes a relative rotation of the front assembly 2 and the rear assembly 5 about the articulation 12, and consequently the advance of the machine along a curved trajectory with the centre of rotation at P. A feedback monitoring facility in the drive system enables the operator to determine whether the force transmitted to the ground by the wheels is sufficient or if it needs to be increased. If necessary, the forces of one wheel can be controlled with respect to the other in such a way as to create an even greater torque. If the operating member of the steering system is a steering wheel, it is also possible to fit small hydraulic cylinders to the steering wheel, in order to simulate a resisting torque on the steering wheel which can be sensed by the operator.

It is clear from the preceding description that the machine according to the invention is characterized by a number of advantages with respect to the known machines. Firstly, the hydraulic steering cylinders and the corresponding hydraulic drive circuit present in conventional machines are completely eliminated, with the advantages mentioned above. In the second place, the provision of four independent electric motors on the four wheels of the machine provides ample capacity for controlling the forces transmitted to the ground by the wheels, to obtain the desired degree of steering. Moreover, as illustrated in Figure 2, the system also has an auxiliary electric motor 23, of a controllable type, which is also supplied by the generator 17, and which drives a pump 24 forming part of the hydraulic circuit supplying the operating equipment with which the machine is provided. This arrangement is advantageous in that it makes it possible to use a relatively simple and economical pump, of the fixed capacity type, the possibility of control being provided by the electric motor 23 driving the pump.

Clearly, provided that the principle of the invention remains unchanged, the details of construction and the embodiments can be varied widely with respect to what has been described and illustrated purely by way of example, without thereby departing from the scope of the present invention.

## Claims

1. Articulated machine, particularly an earth-moving machine, comprising:
a front assembly (2), having two front drive wheels (3, 4);
a rear assembly (5), having two rear drive wheels (6, 7), and coupled to the front assembly (2) by an articulation about an essentially vertical axis (12);
motor means for driving the front wheels (3, 4) and the rear wheels (6, 7); and
means for producing the relative steering rotation between the said front assembly (2) and the said rear assembly (5) about the said vertical axis (12) of articulation,
characterized in that the said front drive wheels (3, 4) are independent of each other, the said rear drive wheels (6, 7) are independent of each other, the said motor means comprise four electric motors (M1, M2, M3, M4) associated, respectively, with the front wheels (3, 4) and rear wheels (6, 7), and controllable independently of each other, in such a way that the said electric motors also constitute the aforesaid means for producing the steering rotation about the said axis of articulation.

2. Articulated machine according to Claim 1, characterized in that the said electric motors (M1 - M4) are controlled by an electronic controller (21) according to a signal (22) from a steering control member, preferably according to a feedback logic.

3. Articulated machine according to Claim 2, characterized in that the said machine comprises an electrical power source (17) for supplying the electric motors (M1 - M4), together with an auxiliary electric motor (23) of the controllable type, for driving a pump (24) of a hydraulic service circuit of the machine, which is also supplied by the said generator (17).

4. Articulated machine according to Claim 3, characterized in that the said source is an electrical power generator (17), for example a fuel cell.

5. Articulated machine according to Claim 3, characterized in that the said electrical power source (17) is an electrical accumulator.

6. Articulated machine according to Claim 3, characterized in that the said electrical power source is a generator driven by an engine.
